# EUROPEAN PATENT APPLICATION

(11) **EP 4 671 540 A1**
(43) Date of publication of application: **31.12.2025**
(21) Application number: 24184658.3
(22) Date of filing: 26.06.2024
(51) Int. Cl.: F04D 7/04, F04D 17/18, F04D 27/00, F04D 29/66, A01C 23/04

(54) **ARRANGEMENT AND METHOD FOR FILLING A TANK WITH SLURRY**

(71) Applicant: Samson Agro A/S, 8800 Viborg (DK)
(72) Inventor: Mejlstrup Jensen, Søren, 9500 Hobro (DK)
(74) Representative: Patrade A/S

(57) **Abstract**

The present invention relates to an arrangement (1) for filling a tank (10) with a slurry (2) and a method for filling a tank (10) with slurry (2) using a centrifugal filling pump, wherein the arrangement comprises:
- a tank (10) configured for receiving and storage of slurry (2);
- a centrifugal filling pump (20) comprising a pump housing (22) wherein the centrifugal filling pump is configured to pump slurry (2) from an inlet (12) into the tank (10) through a feed line (14) connecting the inlet to the tank;
- a primer unit (30) configured for filling the pump housing (22) with the slurry (2); and
- a balance valve (40) configured to control the flow of slurry (2) to and form the centrifugal filling pump (20).

## Description

### Field of the Invention

The present invention relates to an arrangement for filling a tank with slurry wherein the arrangement comprises at least one centrifugal filling pump.

### Background of the Invention

Slurry is a mixture of liquid and denser solids and is used and handled in a variety of industries. In the agriculture industry manure slurry is a mixture of animal waste, dirt, sand, other organic material and/or liquid, usually water. Manure slurry may also contain gas produced by organic processes due to the solids, liquid, and bacteria. The gas may be trapped in gas pockets.

Slurry is a difficult material to transport to and from a slurry tank due to its varying density, viscosity, and material composition. In particular, slurry can cause a great deal of wear and tear on many types of pumps used to pump the slurry.

One solution to this problem is to use a centrifugal pump to pump slurry, because it does not wear down as easily because the impeller of the centrifugal pump is sufficiently far from the pump housing of the centrifugal pump.

The centrifugal pump works by using the centrifugal effect, wherein the slurry acts as a sealant medium between the impeller and the pump housing. The disadvantage of the centrifugal pump is that it cannot move or pump air and is therefore very sensitive to cavitation as this will make the pump stall and stop pumping. As such, it is required that the pump housing of the centrifugal pump is filled or at least partially filled with slurry in order to utilise the centrifugal effect. One way to fill the pump housing of a centrifugal pump is to submerge the centrifugal pump into the slurry. However, this provides other problems such as the exterior being soaked in slurry and requirements for moving the centrifugal pump.

To overcome the disadvantage of submerging the centrifugal pump into the slurry storage, the centrifugal pump can be arranged above the slurry and the system being configured with a means for pre-filling the pump housing with slurry to at least an operational level. The operational level varies between different centrifugal pumps.

However, a limitation of using a centrifugal pump is that cavitation may occur due to variation in the composition of the slurry, resulting in changes to the viscosity, or due to gas pockets expanding because of pressure changes and thereby changing the density of the slurry. Cavitation may occur because the length of the pump hoses and height of the centrifugal pump above the slurry storage is too great. Cavitation occurs because the resistance on the suction side is greater than the vacuum which the centrifugal pump is able to generate. There may be cavitation due to other reasons as the list above is not exhaustive.

Typically, to overcome the problem of cavitation, a centrifugal pump with a small capacity is used to avoid cavitation occurring in the 'hard' situations where e.g. the slurry's viscosity is too high, or the slurry contains pockets of gasses. However, this is disadvantageous in the `easy' situation where the slurry does e.g., not have a high viscosity, as the centrifugal pump with a small capacity will take a long time to pump the slurry and thus the time for filling a slurry tank will be longer. Furthermore, in the `easy' situations the pump operator may be inclined to misuse the small centrifugal pump by operating it at a higher than optimal revolutions per minute to obtain a higher flow of slurry, which causes drastically more wear and tear on the centrifugal pump and significantly reduces the energy efficiency of the pump as a centrifugal pump has a limited range of operation where the centrifugal pump is actually efficient. Increasing the revolutions per minute (RPM) above this optimal range of operation does not result in a much higher pump volume. While if the RPM is too slow, the centrifugal force will be too low and the pump will stall.

### Object of the Invention

One objective of the present disclosure is to provide an arrangement for filling a tank with slurry, wherein the arrangement has a high flow of slurry. A further objective is to provide an arrangement which is highly resistant to cavitation, and which does not lose flow rate or become unable to pump slurry due to cavitation.

A further objective is to provide a method of filling a tank with a slurry.

### Description of the Invention

One objective of the invention is achieved by an arrangement for filling a tank with a slurry, the arrangement comprises:
- a tank configured for receiving and storage of slurry;
- a centrifugal filling pump comprising a pump housing wherein the centrifugal filling pump is configured to pump slurry from an inlet into the tank through a feed line connecting the inlet to the tank;
- a primer unit configured for filling the pump housing with the slurry; and
- a balance valve configured to control the flow of slurry to and from the centrifugal filling pump.

In the present disclosure, a slurry may be any mixture of a solid or semi-solid material with a liquid and/or gas. In one aspect, the slurry is a manure slurry known in agricultural industries.

In one aspect, the tank may be a container for receiving a slurry, e.g., a stationary tank or a slurry tanker. In another aspect, a slurry tanker may be arranged on a slurry transport trailer and/or may have means for discharging slurry e.g., an unloading pump, a quick coupling, an application tool and/or a nozzle.

The inlet of the arrangement may be placed into a slurry storage in order to pump slurry into the feed line and subsequently the tank. E.g., the inlet may be arranged at the end of a flexible hose suitable for being arranged in the slurry storage or the inlet may be a solid pipe connected to an outlet pipe of a slurry storage or another slurry tanker. It may also be a slurry transport trailer transporting the slurry to a field, that needs to be transferred to the slurry tanker in the field.

In a further aspect, the tank or the slurry tanker may comprise an unloading pump and a first outlet valve, wherein the unloading pump is configured for pumping slurry from the tank to a quick coupling and/or an application tool, wherein the quick coupling may provide a connection point for the application tool. The unloading pump may be a centrifugal filling pump, wherein the unloading pump may be arranged below the tank, so that a pump housing is always substantially filled with slurry. The first outlet valve may be a three-way valve configured to open and/or close a connection between the unloading pump, the quick coupling and the tank. The unloading pump may also be a fixed displacement pump like a lobe pump or a screw pump.

The three-way valve may enable two-way connections, e.g. between the unloading pump and the tank, or between the unloading pump and the quick coupling, or between the unloading pump and a mixing line leading to the tank. Furthermore, the three-way valve may enable a partial connection between the unloading pump, the quick coupling and the tank, so that e.g., a slight opening is provided into the tank while a substantially full opening is provided between the unloading pump and the quick coupling. Hence, the first outlet valve is configured to control the amount of slurry flow which is ejected from the quick coupling.

The pump housing of the centrifugal filling pump may comprise a pump inlet and a pump outlet for receiving and pumping out slurry, respectively. The pump inlet and pump outlet may be connected to the feed line so that slurry may be pumped from an inlet of the arrangement to the tank. A suction side is defined at the pump inlet and a pressure side is defined at the pump outlet.

In this disclosure, a flow direction is defined from the inlet of the arrangement to the tank. Hence, when viewed from the point of the centrifugal filling pump, an upstream direction is towards the inlet and a downstream direction is towards the tank.

Inside the pump housing an impeller may be arranged, wherein the impeller is configured for rotating and providing a flow of slurry i.e., the centrifugal filling pump will pump slurry.

The pump housing may be partially or substantially fully filled with slurry, wherein the specific fill level may be an operational volume. When the impeller rotates with the pump housing at or near the operational volume, cavitation is less likely to occur during pumping and/or it ensures that the centrifugal filling pump can adequately pump and/or suck up slurry.

The operational volume may be in the range of 60% to 100%, or in the range of 65% to 95%, or in the range of 70% to 90%, or in the range of 75% to 85%, or 80%, of the total volume of the pump housing. This will vary between different pump housings.

The primer unit may be used to fill the pump housing to the operational volume. The primer unit may fill the pump housing by pumping up slurry from the inlet and into the pump housing. In another aspect the primer unit may fill the pump housing by pumping slurry through the outlet of the centrifugal filling pump and into the pump housing, i.e., in a reverse direction of the flow direction.

The primer unit may be used once before starting the centrifugal filling pump and then turned off as the centrifugal filling pump is running or after the centrifugal filling pump has run for approximately 10 seconds or approximately 8 to 12 seconds, wherein the flow has reached a maximum flow rate. By turning off the primer unit as soon as the centrifugal filling pump has started and is able to maintain the operational volume, the wear and tear on the primer unit is reduced. This will also reduce the overall fuel consumption.

In a further aspect, the primer unit may be turned on again to ensure the operational volume is maintained i.e. when the slurry has a high viscosity or is filled with pockets of gas.

In one aspect, when the pump housing is filled to the operational volume, the centrifugal filling pump may rotate the impeller and create a centrifugal effect which pumps the slurry from the inlet to the outlet in an efficient manner.

As slurry flows through the centrifugal filling pump, the viscosity of the slurry and/or density of the slurry may change over time, e.g., due to a varying mixture of slurry which is an inherent feature of slurry, due to pockets of gas and/or expansion of the pockets of gas. Slurry is in its nature an inhomogeneous fluid. This may cause cavitation which reduces the efficiency of the centrifugal filling pump and/or the flow of slurry is reduced drastically or entirely.

To prevent cavitation an inlet flow of slurry to the pump inlet may be controlled, so that the inlet flow does not exceed a maximum vacuum that the centrifugal filling pump can handle. The inlet flow may be limited by controlling an output flow from the centrifugal filling pump.

The balance valve is configured to control the flow of slurry to and from the centrifugal filling pump by limiting or increasing the flow of slurry. Hence, the balance valve ensures that the pump housing is always substantially filled and/or is at the operational volume during pumping, so that the flow of slurry can be as high as possible.

The balance valve may increase or limit the flow of slurry as a response to the change in viscosity and/or density of slurry and or pockets of gas in the slurry. Hence, an advantageous effect is achieved because the balance valve can prevent cavitation from reducing the efficiency and/or flow of slurry through the centrifugal pump by controlling the flow of slurry. When the balance valve is fully open the maximum flow of slurry is achieved and as the balance valve gradually closes the flow of slurry is reduced.

A further advantageous effect is that a centrifugal filling pump with a larger capacity in terms of maximum flow may be used, because the control of the flow of slurry by the balance valve prevents cavitation occurring due to the varying viscosity and density of the slurry. Whereas without the balance valve, a lower capacity centrifugal filling pump would have to be used, so that cavitation is not caused when changes in viscosity and density of the slurry occur. Hence, although the balance valve does in some situations limit the flow of slurry by being at least slightly closed, the overall average flow of slurry is much higher than a centrifugal pump without the balance valve, because the balance valve ensures that the centrifugal filling pump can maintain a high flow across varying mixtures of slurry and therefore a centrifugal filling pump with a much higher capacity may be used.

In one example, by using the balance valve to control the flow of slurry, a 10,000 liters/minute centrifugal filling pump can be run at or near its full capacity without experiencing cavitation. Whereas without the balance valve only a 3,000 L/min centrifugal filling pump can be used, as a higher capacity centrifugal filling pump would experience cavitation which will interrupt the operation of the centrifugal filling pump.

The one or more inlet valves, balance valves, and/or outlet valves may be mechanical valves, hydraulic systems, pneumatic systems and/or electrical valves configured to be arranged between an open position, a closed position, and any partially closed or open positions in-between.

In a further embodiment of the arrangement, the balance valve is arranged along the feed line downstream from the centrifugal filling pump.

By arranging the balance valve downstream from the centrifugal filling pump, the balance valve can control the flow of slurry out of the centrifugal filling pump.

By closing or partially closing the balance valve, the flow of slurry is reduced and the pressure at the pressure side is increased. Increasing the pressure in the feed line on the pressure side is advantageous as it makes the centrifugal filling pump run smoother, i.e., more efficient. Meanwhile, the pressure drop on the suction side is reduced which reduces vacuum being created on the suction side.

In another aspect, in a configuration where the centrifugal pump may be arranged above the tank, and the slurry may flow or fall due to gravity from the pump housing and into the feed line and/or the tank, the balance valve may be closed to prevent the flow or fall of slurry, so that the pump housing and/or feed line upstream from the balance valve does not become empty when pumping is stopped. This is advantageous, because it may reduce the need to use the primer unit to fill the pump housing partially or fully with slurry before activating the centrifugal filling pump because there is already an initial amount of slurry inside the pump housing and/or the feed line. Hence, this increases the efficiency and reduces wear and tear on the primer unit.

Hence the balance valve ensures that the pump housing is always substantially filled and/or is at the operational volume during pumping, so that the flow of slurry can be as high as possible. I.e., in cases where the viscosity is high and/or density is low, the balance valve can limit the flow of slurry so that cavitation is prevented, and vice versa when the viscosity is low and the density is higher, the balance valve can increase the flow of slurry to obtain a higher pumping speed.

In a further embodiment of the arrangement, the arrangement comprises a manifold arranged upstream from the balance valve, and the manifold is configured to connect two or more centrifugal filling pumps to the tank and/or the primer unit.

In one aspect, a slurry tanker and/or a slurry transport trailer may comprise one or more centrifugal filling pumps and/or one or more different filling pumps.

In a further aspect, one or more different filling pumps may be connected to the manifold to fill the tank with slurry, the different filling pumps may be a vacuum pump, a fixed displacement lobe pump, and/or a screw pump.

The manifold may be arranged on the feed line in-between the balance valve and the two or more different filling pumps or centrifugal filling pumps. I.e., the manifold may be arranged downstream from the pumps and upstream from the balance valve.

One advantage of the manifold and the manifold being upstream from the balance valve is that it allows multiple filling pumps to be concurrently connected to the tank, and/or to the primer unit, and/or to the balance valve. This simplifies and makes the arrangement cheaper because only a single primer unit and/or balance valve is required and/or less feed lines are required between the filling pumps and the tank.

In a further embodiment of the arrangement, the arrangement comprises a return line configured for returning slurry to an upstream position relative to the centrifugal filling pump, wherein the balance valve is arranged along the return line.

The return line may be arranged onto the feed line by a first T-joint arranged downstream relative from the centrifugal filling pump, i.e., the pressure side, and a second T-joint arranged upstream from the centrifugal filling pump, i.e., the suction side. The return line may run parallel to the centrifugal filling pump.

In another aspect, the return line may be connected to the feed line with other intersecting means than T-joints, wherein the intersecting means are well-known in the art of piping and/or hoses.

By arranging the balance valve on the return line, the balance valve may control how much slurry is returned or recirculated from the pressure side of the centrifugal filling pump to the suction side of the centrifugal filling pump. When the balance valve is fully closed, the maximum flow of slurry is achieved from the centrifugal filling pump to the tank and as the balance valve gradually opens the flow of slurry is reduced.

One advantage of controlling the flow of slurry through the return line is that it may ensure the centrifugal filling pump runs with a high internal flow while the flow of slurry on the suction side at the inlet of the arrangement, i.e., upstream from the second T-joint, is reduced. The high internal flow is achieved because the amount of slurry in the pump housing is kept at the operational volume. Hence, the centrifugal filling pump can run at a higher than normal flow. Meanwhile, the pressure drop at the suction side is reduced which reduces vacuum created on the suction side.

Ideally, the balance valve should be as closed as possible or completely closed during pumping, so that a total flow of slurry into the tank is not reduced by the return flow. Hence, the balance valve may only be fully opened during activation of the centrifugal filling pump to avoid the pump housing running dry and/or to avoid creating a vacuum on the suction side. Then, as the flow of slurry increases, the balance valve may be closed partially or fully. Furthermore, in certain situations where the slurry changes density and/or viscosity, the balance valve may be opened partially or fully again to provide return flow, which maintains the high internal flow of the centrifugal filling pump, while slightly reducing the total flow of slurry into the tank. The certain situations may e.g., be a reduced density due to pockets of gas in the slurry and/or increased viscosity of the slurry due to the slurry containing a larger than normal mixture of solids and/or larger pieces of solids.

In a further embodiment of the arrangement, the primer unit is a vacuum pump, or an ejector pump, or a fixed displacement lobe pump, or a screw pump.

The primer unit is configured to fill the pump housing with slurry to the operational volume before the centrifugal filling pump is activated. In a further aspect, the primer unit may be used to fill the pump housing during operation of the centrifugal filling pump to assist in maintaining the operational volume.

One advantage of using a vacuum pump, a fixed displacement lobe pump, or a screw pump, is that the pumps are suitable for pumping air and liquid without being primed with the liquid prior to being activated, unlike the centrifugal filling pump.

In one aspect, the ejector pump may be arranged in series with the centrifugal filling pump and the balance valve. I.e., the ejector pump may be arranged upstream from the balance valve and downstream from the centrifugal filling pump. In the embodiment of the arrangement where the balance valve is arranged on the return line, the ejector pump may be arranged downstream from the centrifugal filling pump and upstream from the tank.

One advantage of using the ejector pump as a primer pump is that it aids the centrifugal filling pump in sucking up slurry due the ejector pump creating a negative pressure. Hence, an advantageous effect is that both the ejector pump and the centrifugal filling pump each create a vacuum inside the pumps which improves the total flow of slurry.

In one example, by combining an ejector pump as a primer pump with a flow capacity of 6,000 liters/minute with a centrifugal filling pump with a flow capacity of 8,000 L/min, the total flow capacity of the arrangement of the present invention may be in excess of 9,000 L/min. Although the flow capacity of the ejector pump, which is arranged between the centrifugal filling pump and the tank, is less than the flow capacity of the centrifugal filling pump and/or the total flow capacity of the arrangement, this does not reduce the total flow capacity, because the ejector pump is essentially a tubing system. I.e., the amount of flow of slurry possible through the ejector pump is much greater than the flow capacity which the ejector pump can produce itself.

In a further embodiment of the arrangement, the arrangement comprises an inlet valve arranged downstream from the inlet, wherein the inlet valve is configured for opening and/or closing flow of slurry through the feed line.

The inlet valve may be arranged between the inlet of the arrangement and the pump inlet and/or the centrifugal filling pump.

The inlet valve remains open when the centrifugal filling pump is pumping slurry.

The inlet valve may be closed so that any slurry in the feed line between the inlet valve and the centrifugal filling pump stays in the feed line and/or in the pump housing instead of flowing or falling out of the feed line and/or the pump housing due to gravity, e.g. which may happen when the centrifugal filling pump is arranged above the inlet and/or a slurry storage and when the centrifugal filling pump is stopped.

This is advantageous, because it may reduce the need to use the primer unit to fill the pump housing partially or fully with slurry before activating the centrifugal filling pump because there is already an initial amount of slurry inside the pump housing and/or the feed line. Hence, this increases the efficiency and reduces wear and tear on the primer unit.

In a further embodiment of the arrangement, the arrangement comprises one or more flow sensors and/or pressure sensors and/or vibration sensors and one or more microphones configured for measuring the flow of slurry.

The one or more flow sensors and/or pressure sensors and/or vibration sensors one or more microphones may be any suitable analogue gauges and/or digital sensors known in the art of liquid flow sensing.

In terms of vibration sensors, the sensor may be a microphone configured to detect small changes in vibration and wherein the microphone may be connected to an analogue or digital vibration meter. The one or more vibration sensors may be arranged on the pump housing and/or inside the pump housing of the centrifugal filling pump. When a centrifugal filling pump experiences cavitation it vibrates with a different frequency than during normal pumping of slurry, this vibrational mode is detectable by a microphone or a different vibration sensor. Furthermore, the vibration sensor may also be used to detect large solid pieces such as stones in the pump housing.

The one or more flow sensors and/or pressure sensors and/or vibration sensors are advantageous as liquid flow readings and/or pressure readings and or vibration readings from the sensors may be used to detect whether the centrifugal filling pump is running in an efficient manner, whether the slurry has a high or low viscosity and/or density, and/or whether cavitation occurs during pumping.

In a further embodiment of the arrangement, the arrangement comprises one or more controllers configured for receiving sensor data from the one or more flow sensors and/or pressure sensors and/or vibration sensors and the one or more controllers are configured for adjusting the balance valve and/or a rotational speed of the centrifugal filling pump to obtain optimal flow of slurry.

Adjustment of the balance valve by the controller may be equal to controlling the flow of slurry to and from the centrifugal filling pump as described in this disclosure.

The adjustment of the balance valve and/or the rotational speed of the centrifugal filling pump may be according to the sensor data received and/or may be according to a pre-defined control sequence.

In one aspect, the one or more controllers may be configured to activate the primer unit before activating the centrifugal filling pump until the pump housing is filled to the operational volume. Furthermore, the one or more controllers may be configured to deactivate the primer unit once the centrifugal filling pump has pumped for a short duration and, thus, can maintain the operational volume.

In a further aspect, the one or more controllers may be configured to re-activate the primer unit when the centrifugal filling pump is unable to maintain the operational volume and/or when cavitation occurs in the pump housing.

In these aspects, the activation, and/or deactivation, and/or re-activation, of the primer unit may be according to the sensor data received and/or may be according to a pre-defined control sequence.

In one aspect, the one or more controllers may be configured to adjust the inlet valve between being open and closed. The adjustment of the inlet valve may be according to the sensor data received and/or may be according to a pre-defined control sequence.

In a further embodiment of the arrangement, the one or more flow sensors and/or pressure sensors and/or vibration sensors are arranged downstream from the one or more centrifugal filling pump, and/or upstream from the centrifugal pumps, and/or inside the centrifugal filling pumps.

The one or more flow and/or pressure sensors and/or vibration sensors may be arranged in close vicinity to the centrifugal filling pump, e.g., on the suction and/or pressure side. One advantage of arranging the one or more sensors close to the centrifugal filling pump, is that once the sensors detect a change in flow and/or pressure and/or vibrations, which may be a result of a change in density and/or viscosity of the slurry and/or due to cavitation, control of the balance valve may be performed quicker.

Preferably, the one or more pressure sensors may be arranged on the suction side, as this is advantageous in terms of measuring the negative pressure or vacuum. Whereas the one or more flow sensors may be arranged on either the suction side and/or the pressure side.

In one aspect, wherein the balance valve is arranged on the return line, the one or more flow sensors and/or pressure sensors may be arranged along the return line in order to measure the flow of slurry being recirculated. In turn, sensor data from the return line may be used to adjust the balance valve arranged on the return line in order to obtain an efficient and optimal flow of slurry into the tank.

In a further embodiment of the arrangement, the arrangement comprises an unloading pump configured for pumping slurry out of the tank, and the primer unit is an ejector pump connected to the unloading pump and the balance valve, wherein the balance valve in a closed position enables the unloading pump to discharge slurry from the tank through the ejector pump and out of the inlet via the centrifugal filling pump, while the centrifugal filling pump is in an inactive state. The centrifugal filling pump is in an inactive state if the impeller of the centrifugal filling pump is not being rotated by a motor or drive shaft.

In one aspect, the unloading pump may be a centrifugal filling pump or a lobe pump or a displacement pump. The unloading pump may be according to the one or more aspects described above.

A further advantage of the ejector pump is that it can provide a discharge flow of slurry, wherein the flow of slurry is in a reverse direction, i.e. from the ejector pump upstream towards the inlet of the arrangement. The discharge flow may be used to empty the tank into a slurry storage instead of ejecting and spreading the slurry with the quick coupling. Hence, the discharge flow enables slurry to quickly and efficiently be pumped up from one slurry storage and transported to another slurry storage where it is discharged into.

In one aspect, the discharge flow may be provided by arranging a second outlet valve between the unloading pump and the first outlet valve and connecting the second outlet valve to the ejector pump, wherein the second outlet valve is a three-way valve. In turn, the discharge flow is obtained by activating the unloading pump, while fully closing the balance valve and the first outlet valve and opening the second outlet valve so that a flow is provided from the unloading pump and into the ejector pump.

In one aspect, during the discharge flow, the first outlet valve may be slightly opened between the second valve and the tank, so that a small flow of slurry is returned to the tank. The small return flow of slurry provides a stirring effect which may enable the slurry to be discharged faster from the tank through the unloading pump.

In another aspect, the second outlet valve may be a two-way valve connected to a T-joint, wherein the T-joint provides a connection between the first outlet valve, the unloading pump and the ejector pump and wherein the two-way valve is arranged between the T-joint and the ejector pump.

A further objective of the invention is achieved by a method of filling a tank with slurry using a centrifugal filling pump comprising steps of:
- filling a pump housing of the centrifugal filling pump with slurry to an operational volume using a primer unit;
- activating the centrifugal filling pump to fill the tank with slurry; and
- adjusting a balance valve to control flow of slurry to and from the centrifugal filling pump such that the operational volume is maintained and so that an optimal flow of slurry is obtained.

Slurry is pumped through the centrifugal filling pump and to the tank by a feed line being arranged between an inlet and the tank. Wherein the inlet is arranged upstream from the centrifugal filling pump and the tank. The inlet may be arranged in a slurry storage to pump slurry into the feed line.

The method may be executed using the arrangement according to the present disclosure.

The operational volume is a volume of slurry in the pump housing required for the impellers of the centrifugal filling pump to be able to efficiently pump slurry from a pump inlet to a pump outlet of the pump housing. The volume of slurry may be brought below the operational volume by e.g., cavitation, gas pockets in the slurry, and/or by thick slurry.

When the centrifugal filling pump experiences hard conditions, wherein the slurry may be thick, contains pockets of gas, has a high density, has a low viscosity, and/or is lifted over a great distance, the flow of slurry must be controlled to avoid cavitation so that the centrifugal filling pump does not stall or run too inefficiently. The balance valve enables control of the flow of slurry by restricting the flow by closing or partially closing the balance valve, which in turn increases the pressure of the slurry at the balance valve which makes the centrifugal filling pump run smoother, i.e., more efficiently. On the opposite side, the balance valve may also be fully opened to increase the flow of slurry when the slurry has a low density, high viscosity, etc.

By using the balance valve to maintain the operational volume in the pump housing, the centrifugal filling pump can maintain the optimal flow of slurry. Hence, although the balance valve does in some situations limit the flow of slurry by being at least slightly closed, the overall average flow of slurry is much higher than a centrifugal pump without the balance valve, because the balance valve ensures that the centrifugal filling pump can maintain a high flow across varying mixtures of slurry and therefore a centrifugal filling pump with a much higher capacity may be used.

In one aspect, the primer unit may run for a duration of time while the centrifugal filling pump is being activated and starts pumping. The duration of time may be until the flow of slurry provided by the centrifugal filling pump has reached a substantially maximum value. In a further aspect, the primer unit may be re-activated to fill the pump housing with slurry e.g., when the volume of slurry in the pump housing is less than the operational volume, when the density of slurry is high, and/or when slurry contains pockets of gas.

In a further embodiment of the method, the method comprises a further step of:
- maintaining the operational volume by providing a return flow of slurry into the centrifugal filling pump by a step of adjusting a balance valve to control the return flow of slurry.

The return flow may be provided when the centrifugal filling pump experiences hard conditions which may cause cavitation. In another aspect, a very low volume of return flow may be provided throughout the filling process, so that it aids in maintaining the operational volume.

The return flow may be provided by directing a part of the flow of slurry from a position downstream from the centrifugal filling pump through a return line to a position upstream from the centrifugal filling pump, wherein the amount of the flow of slurry directed through the return line is controlled by the balance valve.

The return flow is advantageous because it ensures that the pump housing maintains the operational volume. The return flow is also advantageous when the viscosity of slurry changes abruptly, e.g., due to large solid pieces, which may get stuck in the feed line and/or the centrifugal filling pump and cause a lowering of the flow of slurry, because the return flow can increase the viscosity of the slurry by distributing and/or breaking up the large solid pieces in the return slurry.

In a further embodiment of the method, the steps of adjusting the balance valve to control flow of slurry and/or maintaining the operational volume by providing the return flow of slurry is done according to sensor data received by one or more flow sensors and/or pressure sensors and/or vibration sensors.

Use of sensor data to control the flow of slurry and/or the return flow of slurry is advantageous as the flow sensors and/or pressure sensors and/or vibration sensors can detect if the centrifugal filling pump provides an optimal flow of slurry; whether the slurry has a high or low viscosity and/or density; whether the slurry contains pockets of gas; and whether cavitation occurs or might occur during pumping. Hence, the control of the balance valve can be made very precisely and in turn the optimal flow of slurry can easily be obtained because the loss of flow due to opening the balance valve can be minimised. In doing so, the precise control of the balance valve also ensures that the operational volume is maintained throughout the filling process.

In a further embodiment of the method, the method comprises a step of:
- ramping the flow of slurry during start of filling and/or end of filling.

The ramping may be done by controlling the RPM of the centrifugal filling pump and/or by controlling the balance valve. Ramping may be an increase or decrease in amount with or without a constant rate of increase or decrease.

The ramping of the flow of slurry may be by ramping up the flow during the start of filling, so that the flow is increased up to a pre-determined threshold. In another aspect, the ramping may be done according to sensor data received by one or more pressure sensors and/or flow sensors.

When the filling process is initiated the flow of slurry from the primer unit into the pump housing is generally lower than the flow capacity of the centrifugal filling pump. Then, when the centrifugal filling pump is activated, it must accelerate the slurry fast to achieve the centrifugal effect, to achieve an efficient operation, and to achieve the pump's maximum speed. However, this rapid acceleration of the slurry risks causing cavitation.

The ramping of the flow during the start of filling is advantageous because it reduces the risk of cavitation by ensuring that the pump housing does not get emptied before the operational volume can be maintained by the primer unit and/or the balance valve. This enables the centrifugal filling pump to achieve the maximum pumping speed.

When the tank is almost fully filled with slurry, the flow of slurry into the tank may cause squelching which results in the slurry taking up more space inside the tank, e.g., due to pockets of gas not being vented out of the tank.

The ramping of the flow of slurry may be by ramping down the flow during the end of filling, so that the flow is slowly decreased to a non-flow. In another aspect, the ramping may be done according to sensor data received by one or more pressure sensors and/or flow sensors.

Downward ramping of the flow is advantageous because it reduces the filling speed to ensure that the gas in the tank has enough time to escape and hereby ensure a high filling percentage of the tank. A high filling percentage is important as a slurry tanker can be filled up to 6,000 times each season. Hence, remaining air due to a lower filling percentage results in increased loads and increased operation hours and fuel consumption.

A further objective of the invention is achieved by a method for discharging slurry from a tank through an inactive centrifugal filling pump, wherein the method comprises steps of:
- adjusting a balance valve arranged between an ejector outlet of an ejector pump and the tank to a closed position; and
- pumping the slurry out of the tank using an unloading pump to discharge slurry from the tank through the ejector pump to a first ejector inlet and through the inactive centrifugal filling pump arranged upstream from the first ejector inlet.

The centrifugal pump may be according to the herein disclosed unloading pump and/or the herein disclosed centrifugal filling pump. The ejector pump may be according to the herein disclosed aspects related to the arrangement.

Discharging slurry from the tank may be defined as a discharge flow of slurry wherein the flow of slurry is in a reverse direction, i.e. from the ejector pump upstream towards the inlet of the arrangement. The discharge flow may be used to empty the tank into a slurry storage instead of ejecting and spreading the slurry with a quick coupling and application tool. Hence, the discharge flow enables slurry to quickly and efficiently be pumped up from one slurry storage and transported to another slurry storage where it is discharged into.

### Description of the Drawing

Various examples are described hereinafter with reference to the figures. The reference numerals refer to like elements throughout. The elements will, thus, not be described in detail with respect to the description of each figure. It should also be noted that the figures are only intended to facilitate the description of the examples. They are not intended as an exhaustive description of the claimed invention or as a limitation on the scope of the claimed invention. In addition, an illustrated example need not have all the aspects or advantages shown. An aspect or an advantage described in conjunction with a particular example is not necessarily limited to that example and can be practiced in any other examples even if not so illustrated, or if not so explicitly described.

Exemplary embodiments of the invention are described in the figures, whereon:
Fig. 1a illustrates one embodiment of an arrangement comprising a primer unit.
Fig. 1b illustrates one embodiment of an arrangement comprising an ejector pump.
Fig. 2a illustrates one embodiment of an arrangement comprising a manifold.
Fig. 2b illustrates one embodiment of an arrangement comprising a manifold.
Fig. 3a illustrates one embodiment of an arrangement comprising a return line.
Fig. 3b illustrates one embodiment of an arrangement comprising a return line and an ejector pump.
Fig. 4a illustrates one embodiment of a method of filling a tank with slurry.
Fig. 4b illustrates one embodiment of a method of discharging slurry from a tank.
Fig. 5a illustrates one embodiment of a centrifugal filling pump.
Fig. 5b illustrates one embodiment of a centrifugal filling pump with a reverse flow.
Fig. 6a illustrates one embodiment of an ejector pump.
Fig. 6b illustrates one embodiment of an ejector pump with a discharge flow.

### Detailed Description of the Invention

Exemplary examples will now be described more fully hereinafter with reference to the accompanying drawings. In this regard, the present examples may have different forms and should not be construed as being limited to the descriptions set forth herein. Accordingly, the examples are merely described below, by referring to the figures, to explain aspects.

Throughout the specification, when an element is referred to as being "connected" to another element, the element is "directly connected" to the other element, "electrically connected", "fluidic connected" or "communicatively connected" to the other element with one or more intervening elements interposed there between.

The terminology used herein is for the purpose of describing particular examples only and is not intended to be limiting. As used herein, the terms "comprises" "comprising" "includes" and/or "including" when used in this specification specify the presence of stated features, integers, steps, operations, elements, and/or components, but do not preclude the presence or addition of one or more other features, integers, steps, operations, elements, components, and/or groups thereof.

Unless otherwise defined, all terms used herein (including technical and scientific terms) have the same meaning as commonly understood by those skilled in the art to which this invention pertains. It will be further understood that terms, such as those defined in commonly used dictionaries, should be interpreted as having a meaning that is consistent with their meaning in the context of the relevant art and will not be interpreted in an idealized or overly formal sense unless expressly so defined in the present specification.

| **Reference:** | **Reference number:** |
|---|---|
| Arrangement | 1 |
| Tank | 10 |
| Method | 100 |
| Filling | 110 |
| Inlet | 12 |
| Activating | 120 |
| Adjusting | 130 |
| Feed line | 14 |
| Maintaining | 140 |
| Ramping | 150 |
| Manifold | 16 |
| Pumping | 160 |
| Downstream position | 17 |
| Return line | 18 |
| Upstream position | 19 |
| Slurry | 2 |
| Centrifugal filling pump | 20 |
| Pump housing | 22 |
| Pump inlet | 24 |
| Suction side | 25 |
| Pump outlet | 26 |
| Pressure side | 27 |
| Impeller | 28 |
| Primer unit | 30 |
| Primer pump | 31 |
| Primer valve | 32 |
| Ejector pump | 34 |
| Ejector housing | 340 |
| First ejector inlet | 341 |
| Second ejector inlet | 342 |
| Ejector outlet | 343 |
| Discharge flow | 344 |
| Primer check valve | 36 |
| Balance valve | 40 |
| Second balance valve | 42 |
| Inlet valve | 50 |
| Controller | 60 |
| Vibration sensor / microphone | 61 |
| Flow sensors | 62 |
| Flow gauge | 63 |
| Pressure sensors | 64 |
| Pressure gauge | 65 |
| Quick coupling | 70 |
| Unloading pump | 72 |
| Centrifugal pump | 73 |
| First outlet valve | 74 |
| Mixing line | 75 |
| Second outlet valve | 76 |

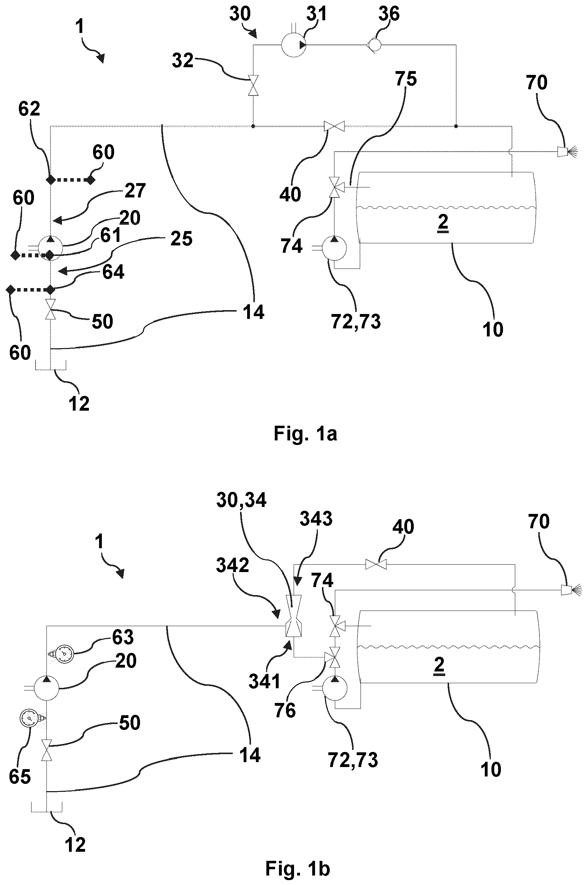

Figure 1a illustrates one embodiment of an arrangement 1 for filling a tank 10 with slurry 2, wherein the slurry 2 is pumped from a slurry storage or another tank through an inlet 12. The arrangement 1 comprises the tank 10, a feed line 14 with an inlet 12, wherein the tank is configured for receiving the slurry 2 pumped through the feed line 14 from the inlet 12. The slurry 2 is pumped through the feed line 14 by a centrifugal filling pump 20 arranged between the inlet 12 and the tank 10, i.e., a flow direction is defined from the inlet 12 to the tank 10, and the inlet 12 is said to be upstream from the centrifugal filling pump 20, and the tank 10 is downstream from the centrifugal filling pump 20. The centrifugal filling pump comprises a pump housing with a pump inlet and a pump outlet. At the pump inlet, a suction side 25 is defined, and at the pump outlet a pressure side 27 is defined.

Downstream from the centrifugal filling pump 20 a balance valve 40 is arranged. The balance valve 40 is configured to be in an open position, a closed position, and any partially closed or open position in-between. Hence, closing the balance valve 40 increases the pressure at the pressure side 27 of the centrifugal filling pump 20, this makes the centrifugal filling pump run smoother, meaning it is more efficient. Partial closing of the balance valve 20 also reduces the flow of slurry 2 through the valve. However, the slight loss of flow of slurry 2 is acceptable because generally a much higher capacity centrifugal filling pump 20 can be utilised together with the balance valve 20, because control of the balance valve 20 prevents cavitation from occurring in the pump housing.

The arrangement 1 comprises a primer unit 30, wherein the primer unit 30 comprises a pump 31 configured for filling the pump housing of the centrifugal filling pump 20 with slurry 2 to an operational volume. The operational volume is a percentage of the total volume of the pump housing, which should contain slurry 2 or any other liquid, in order for the centrifugal filling pump 20 to run efficiently and to prevent cavitation from occurring. The primer pump 31 may be a vacuum pump, or an ejector pump, or a fixed displacement lobe pump, or a screw pump. Furthermore, the primer unit 30 comprises a primer valve 32 and a primer check valve 36. The primer valve 32 is configured for opening and closing a line for slurry 2 to flow to the primer pump 31. The primer check valve 36 is configured for only providing flow of slurry in one direction and prevent backflow in the opposite direction, i.e., the check valve 36 is a one-way valve.

Between the inlet 12 and the centrifugal filling pump 20, an inlet valve 50 is arranged. The inlet valve 50 is configured to open and close. The inlet valve 50 is closed when the arrangement 1 is not used for pumping slurry 2 and open when the arrangement 1 is used for pumping slurry 2. By closing the inlet valve 50 as the pumping process is stopped, slurry 2 can be maintained in the pump housing and/or the feed line 14, this ensures that the primer unit 30 either does not need to be used to maintain the operational volume or the primer unit 30 is only required to run for a very small duration to fill the pump housing to the operational volume.

The arrangement 1 comprises at least one flow sensor 62 arranged at the pressure side 27 of the centrifugal filling pump 20. The flow sensor 62 is connected to a controller 60 and the flow sensor 62 is configured to measure the flow of slurry at the pressure side 27. The one or more flow sensors 62 may also be arranged elsewhere on the feed line 14 and/or on the suction side 25. Furthermore, at least one pressure sensor 64 is arranged on the suction side 25 of the centrifugal filling pump 20. The pressure sensor 64 is connected to a controller 60 and the pressure sensor 64 is configured to measure a pressure of the slurry on the suction side 25. The one or more pressure sensors 64 may also be arranged elsewhere on the feed line 14 and/or on the pressure side 27.

The flow sensor 62 and pressure sensor 64 may be connected to one or more controllers 60, wherein the controller 60 may be the same for both sensors 62, 64, and wherein both sensors 62, 64 are configured to transmit sensor data to the one or more controllers 60. The controllers 60 are configured for controlling the centrifugal filling pump 20 and/or the one or more valves, e.g., the balance valve 40, the inlet valve 50, the primer valve 32, so that the valves are opened and closed according to the pumping process and/or the sensor data.

The system may include one or more vibration sensors 61 connected to one or more controllers 60. The one or more vibration sensors 61 should be positioned as close to the centrifugal filing pump 20 as possible as cavitation cause at least part of the centrifugal filing pump 20 to vibrate differently which can be detected by the one or more vibration sensors 61 if close enough to the centrifugal filing pump 20. The best data is achieved by being attached to the centrifugal filing pump 20. However, being close or near the centrifugal filing pump 20 achieves sufficient data to detect cavitation. The vibration sensor 61 may be a microphone or an accelerometer.

The sensors 61, 62, 64 and the one or more controllers 60 are advantageous in that sensor data can be used to detect if the pumping process can be improved, e.g., by detecting that cavitation is likely to occur or is occurring, and/or that the slurry 2 has varying density and/or a high or low viscosity. Thus, once the sensor data detects that cavitation is occurring, the cavitation may be prevented by adjusting the balance valve 20.

The embodiments of the arrangement 1 illustrated in figures 1b, 2a, 2b, 3a, and 3b, may also comprise one or more flow sensors, vibration sensors, pressure sensors and/or controllers according to the herein disclosed embodiments and the illustration of fig. 1a. These aspects are not shown in the aforementioned figures for sake of simplicity.

The arrangement 1 comprises a quick coupling 70 arranged downstream from the tank 10, wherein the quick coupling 70 is configured to eject slurry 2 from the arrangement 1. The quick coupling 70 may be configured for connecting to an application tool for spreading the slurry 2 over a field or a different area. Between the quick coupling 70 and the tank 10 an unloading pump 72 is arranged and configured for pumping slurry 2 from the tank 10 to the quick coupling 70. The unloading pump is preferably a centrifugal pump 73 or fixed displacement pumps like a lobe pump or a screw pump and may be arranged vertically below the tank 10, so that the pump housing is substantially filled with slurry 2 during pumping. Downstream from the unloading pump 72 a first outlet valve 74 is arranged and configured to be in an open position, a closed position and any partially closed or open position in-between. Wherein the first outlet valve 74 is a three-way valve connected by lines to the unloading pump 72, the quick coupling 70 and the tank 10 through a mixing line 75. The first unloading valve 74 is advantageous because it allows an amount of slurry 2 to be pumped back into the tank 10 through the mixing line 75 while a majority of the slurry 2 is pumped to the quick coupling 70. The small return flow of slurry 2 through the mixing line 75 stirs the slurry 2 in the tank 10, which may prevent the slurry 2 in the tank 10 from forming large pieces of solid slurry over time.

Figure 1b illustrates an embodiment of the arrangement 1 similar to figure 1a in that the arrangement 1 comprises a tank 10, an inlet 12, a feed line 14, a centrifugal filling pump 20, a balance valve 40, an inlet valve 50, and a quick coupling 70.

The arrangement comprises a primer unit 30 which is an ejector pump 34. The ejector pump 34 has a second ejector inlet 342 which is arranged in series with the centrifugal filling pump 20, and an ejector outlet 343 arranged in series with the balance valve 40, and the ejector pump 34 is configured for filling the pump housing of the centrifugal filling pump 20 with slurry 2. One advantage of using the ejector pump 34 as a primer unit 30 is that it aids the centrifugal filling pump 20 in sucking up slurry 2 due the ejector pump 34 creating a negative pressure. Hence, an advantageous effect is that both the ejector pump 34 and the centrifugal filling pump 20 each create a vacuum inside the pumps which improves the total flow of slurry 2.

Similar to fig. 1a, when the slurry 2 has a changing density and/or viscosity, the balance valve 40 can be controlled to limit the flow of slurry, so that cavitation in the centrifugal filling pump 20 is prevented. Furthermore, while the slurry 2 has a mixture of liquids and solids which do not cause cavitation, the balance valve 40 may be opened further to increase the flow of slurry.

Similar to fig. 1a, the arrangement 1 comprises an unloading pump 72, a quick coupling 70, and a first outlet valve 74, wherein the unloading pump may be a centrifugal pump 73. Furthermore, between the first outlet valve 74 and the unloading pump 72 a second outlet valve 76 is arranged with lines connecting to the unloading pump 72, the first outlet valve 74 and a first ejector inlet 341 of the ejector pump 34.

The second outlet valve 76 is a three-way valve similar to the first outlet valve 74 and the second outlet valve 76 is configured for providing a discharge flow of slurry 2 wherein the slurry 2 is pumped in the reverse direction, meaning from the tank 10 to the inlet 12 through the ejector pump 34. The discharge flow of slurry 2 is advantageous for emptying the tank 10 of slurry 2, e.g., when slurry 2 must be transported from one slurry storage to another slurry storage. The discharge flow is provided by opening the second outlet valve 76 between the unloading pump 72 and the ejector pump 34 and by closing the balance valve 40. The discharge flow may also be used to fill the pump housing of the centrifugal filling pump 20 with slurry 2 before initiating the pumping process.

The arrangement 1 comprises at least one flow gauge 63 arranged at the pressure side of the centrifugal filling pump 20. The flow gauge 63 is configured to measure the flow of slurry 2 through the feed line 14 and may be used to manually operate the centrifugal filling pump 20, the primer unit 30 and/or the balance valve 40.

The arrangement 1 comprises at least one pressure gauge 65 arranged at the suction side of the centrifugal filling pump 20. The pressure gauge 65 is configured to measure the pressure of the slurry 2 through the feed line 14 and may be used to manually operate the centrifugal filling pump 20, the primer unit 30 and/or the balance valve 40.

The embodiments of the arrangement 1 illustrated in figures 1a, 2a, 2b, 3a, and 3b, may also comprise one or more flow gauges and/or pressure gauges according to the herein disclosed embodiments and the illustration of fig. 1b. These aspects are not shown in the aforementioned figures for sake of simplicity.

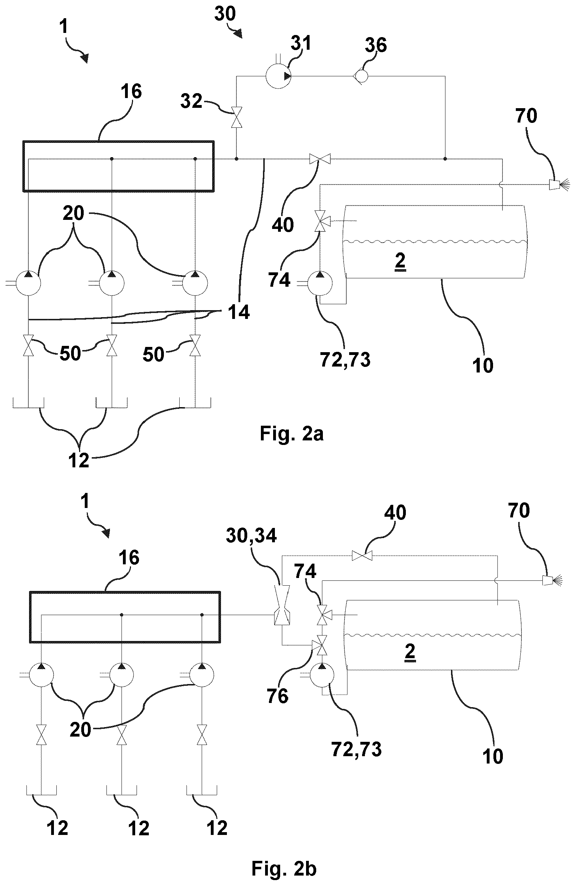

Figure 2a illustrates an embodiment of an arrangement 1 similar to the embodiment illustrated in fig. 1a. In this illustration the arrangement 1 comprises a manifold 16 arranged on the feed line 14 upstream from the primer unit 30 and the balance valve 40.

The manifold 16 is configured for connecting two or more centrifugal filling pumps 20 and/or any other filling pumps for pumping slurry to the feed line 14. One advantage of the manifold 16, and in particular that the manifold 16 being upstream from the balance valve 40, is that it allows multiple centrifugal filling pumps or filling pumps to be connected at once to the tank 10, the primer unit 30 and the balance valve 40. This simplifies and makes the arrangement cheaper because only a single primer unit 30 and balance valve 40 is required, and/or less feed lines 14 are required between the centrifugal filling pumps 20 and the tank 10.

Figure 2b illustrates an embodiment of an arrangement 1 similar to the embodiment illustrated in fig 2a. In this illustration the arrangement 1 comprises a manifold 16 arranged on the feed line 14 of fig. 2a. As such, the same advantages as described above are applicable to this embodiment, albeit the primer unit 30 is an ejector pump 34, as illustrated in fig. 1b.

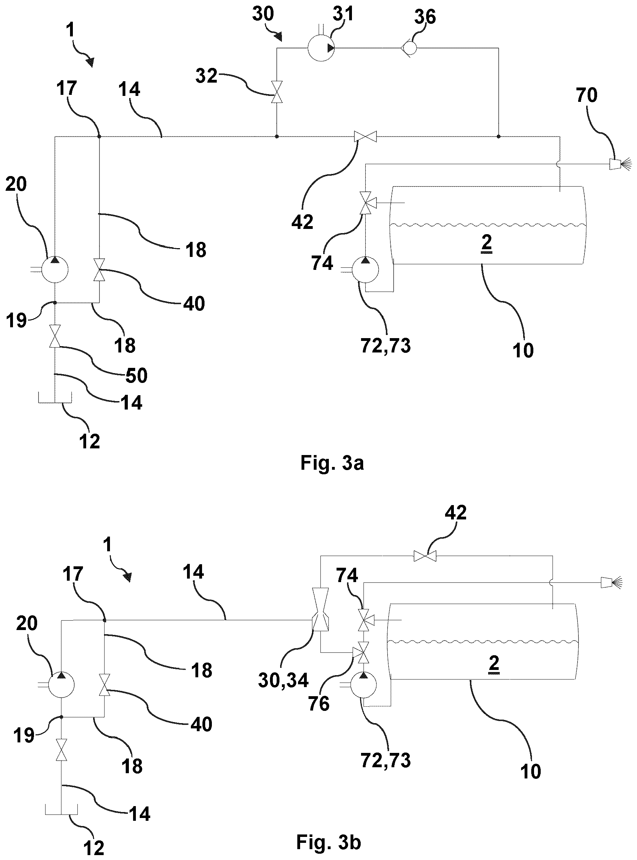

Figure 3a illustrates an embodiment of an arrangement 1 similar to fig. 1a, in that the embodiment comprises at least a tank 10, an inlet 12, a feed line 14, a centrifugal filling pump 20, a primer unit 30, an unloading pump 72, a first unloading valve 74, and a quick coupling 70.

The arrangement 1 is different in that a return line 18 is arranged between a downstream position 17 and an upstream position 19 relative to the centrifugal filling pump. I.e., the return line 18 is parallel to the centrifugal filling pump 20. The return line 18 is configured for returning slurry 2 to the centrifugal filling pump 20. Furthermore, the balance valve 40 is arranged on the return line 18 and the balance valve 40 is configured for controlling the amount of slurry 2 returned to the centrifugal filling pump 20.

One advantage of controlling the flow of slurry 2 through the return line 18 is that it may ensure the centrifugal filling pump 20 runs with a high internal flow while the flow of slurry 2 on the suction side of the inlet 12 of the arrangement 1, i.e., upstream from the centrifugal filling pump, is reduced. The high internal flow is achieved because the amount of slurry 2 in the pump housing is kept at the operational volume. Hence, the centrifugal filling pump 20 can run at a higher-than-normal flow. Meanwhile, the pressure drop at the suction side is reduced which reduces vacuum being created at the suction side.

Furthermore, the arrangement 1 may comprise a second balance valve 42 arranged between the centrifugal filling pump 20 and the tank 10, wherein the second balance valve 42 is configured to limit the flow of slurry to further prevent cavitation, as described in relation to fig. 1a. The second balance valve 42 is not necessary as the principle can work without the second balance valve 42 when filling the tank.

Figure 3b illustrates an embodiment of an arrangement 1, wherein the arrangement 1 is similar to the arrangement in fig. 3a in that the arrangement 1 comprises at least a tank 10, an inlet 12, a feed line 14, a return line 18, a centrifugal filling pump 20 and a balance valve 40. Furthermore, the arrangement 1 is similar to the arrangement in fig. 1b in that the arrangement 1 comprises an ejector pump 34, a quick coupling 70, an unloading pump 72, a first outlet valve 74, and a second outlet valve 76, wherein the unloading pump may be a centrifugal pump 73.

Furthermore, the arrangement 1 may comprise a second balance valve 42 arranged between the centrifugal filling pump 20 and the tank 10, wherein the second balance valve 42 is configured to limit the flow of slurry to further prevent cavitation, as described in relation to fig. 1a. The second balance valve 42 is not necessary as the principle can work without the second balance valve 42 when filling the tank. The second balance valve 42 is required in order to provide a discharge flow with the ejector pump 34.

Hence, an advantage of this embodiment of the arrangement 1 is that it both comprises a return line 18 with a balance valve 40 for providing the return flow of slurry 2; an ejector pump 34 useable as a primer unit 30 that aids the centrifugal filling pump 20 in sucking up slurry 2 due the ejector pump 34 creating a negative pressure; and a first and second outlet valve 74, 76 that combined with the ejector pump 34 can provide a discharge flow of slurry 2.

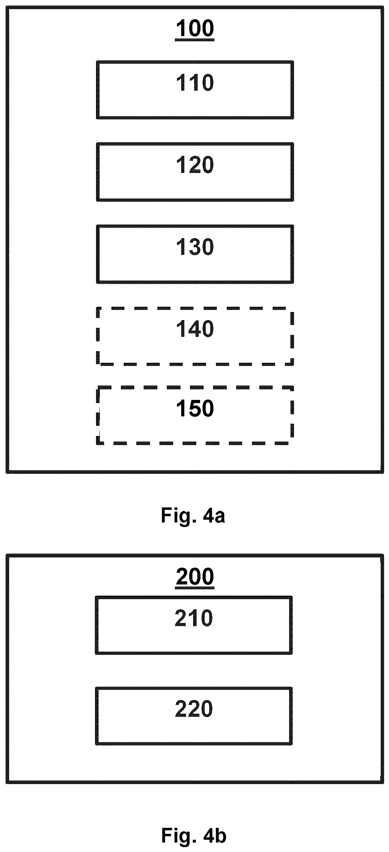

Figure 4 illustrates one embodiment of a method 100 of filling a tank with slurry using a centrifugal filling pump, wherein the method 100 comprises the steps of:
- filling 110 a pump housing of the centrifugal filling pump with slurry to an operational volume using a primer unit;
- activating 120 the centrifugal filling pump to fill the tank with slurry; and
- adjusting 130 a balance valve to control flow of slurry to and from the centrifugal filling pump such that the operational volume is maintained and so that an optimal flow of slurry is obtained.

The dashed boxes indicate optional acts, wherein one or more optional steps may be performed together with the method 100.

The method 100 may comprise one or more of the further steps of:
- maintaining 140 the operational volume by providing a return flow of slurry into the centrifugal filling pump by a step of adjusting a balance valve to control the return flow of slurry; and/or
- ramping 150 the flow of slurry during start of filling and/or end of filling.

Figure 4b illustrates one embodiment of a method 200 for discharging slurry from a tank through an inactive centrifugal filling pump, wherein the method comprises steps of:
- adjusting 210 a balance valve arranged between an ejector outlet of an ejector pump and the tank to a closed position; and
- pumping 220 the slurry out of the tank using an unloading pump arranged between the tank and a second ejector inlet to discharge slurry from the tank through the ejector pump to a first ejector inlet and through the inactive centrifugal filling pump arranged upstream from the first ejector inlet.

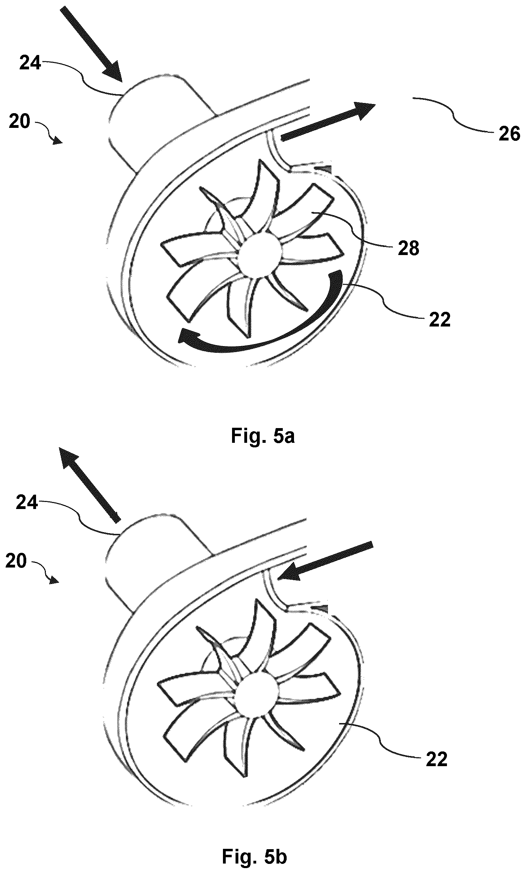

Figure 5a illustrates one embodiment of a centrifugal filling pump 20. The centrifugal filling pump 20 comprises a pump housing 22 with a pump inlet 24 for receiving a slurry and a pump outlet 26 for pumping out the slurry. Inside the pump housing 22, an impeller 28 is arranged and configured to rotate and pump the slurry by utilising the centrifugal effect.

The unnumbered arrows illustrate a normal flow of slurry when the centrifugal filling pump 20 is pumping and the impeller 28 is rotating.

Figure 5b illustrates one embodiment of the centrifugal filling pump 20, wherein a reverse flow of slurry is provided through the pump housing 22. The reverse flow is only used for discharging of slurry from the tank through the inlet connected to the centrifugal pump 20. The centrifugal filling pump 20 must be inactive in order for the reverse flow of slurry to be possible.

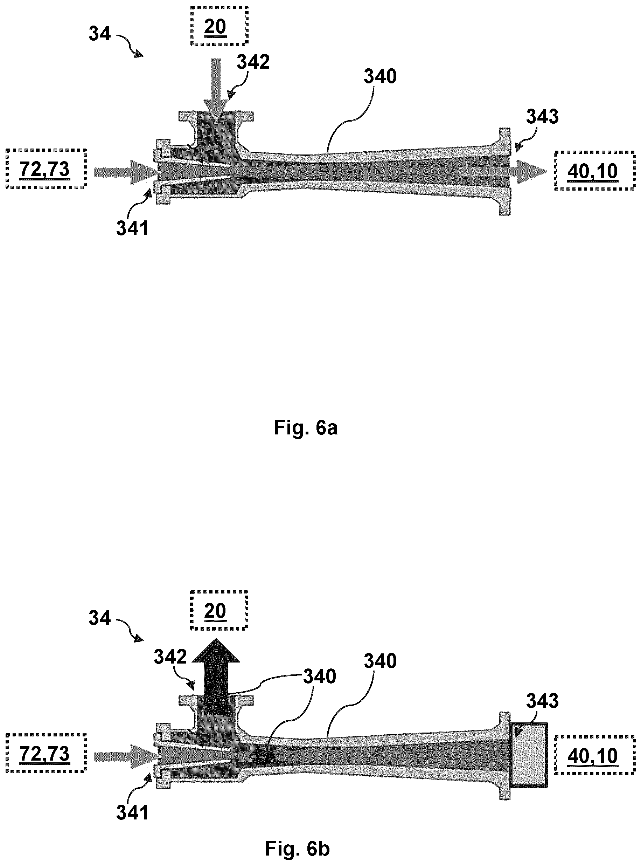

Figure 6a illustrates one embodiment of an ejector pump 34 comprising an ejector housing 340 having a first ejector inlet 341, a second ejector inlet 342 and an ejector outlet 343.

The ejector pump 34 may be connected to parts of the herein disclosed arrangement (as illustrated in fig. 1b, 2b, and 3b) as illustrated by boxes in this figure. E.g., The first ejector inlet 341 may be connected to an unloading pump 72 or a centrifugal pump 73. The second ejector inlet 342 may be connected to a centrifugal filling pump 20. The ejector outlet may be connected to a balance valve 40 or a tank 10.

Figure 6b illustrates one embodiment of the ejector pump 34, wherein a discharge flow 344 is provided when the ejector outlet 343 is blocked, e.g. by a balance valve. The discharge flow is slurry being pumped from the ejector inlet 341 to the ejector inlet 342, as illustrated by the method in fig. 4b. This is not the most ideal way to discharge a tank full of slurry as there are other ways to do this faster and more efficiently, however this discharge flow does not require additional components as the already existing flow path can be used in reverse.

## Claims

1. An arrangement (1) for filling a tank (10) with a slurry (2), the arrangement comprises:
- a tank (10) configured for receiving and storage of slurry (2);
- a centrifugal filling pump (20) comprising a pump housing (22) wherein the centrifugal filling pump is configured to pump slurry (2) from an inlet (12) into the tank (10) through a feed line (14) connecting the inlet to the tank;
- a primer unit (30) configured for filling the pump housing (22) with the slurry (2); and
- a balance valve (40) configured to control the flow of slurry (2) to and from the centrifugal filling pump (20).

2. The arrangement (1) according to claim 1, wherein the balance valve (40, 42) is arranged along the feed line (14) downstream from the centrifugal filling pump (20).

3. The arrangement (1) according to claim 1 or 2, wherein the arrangement (1) comprises a manifold (16) arranged upstream from the balance valve (40, 42) and the manifold is configured to connect two or more centrifugal filling pumps (20) to the tank (10) and/or the primer unit (30).

4. The arrangement (1) according to claim 1, wherein the arrangement (1) comprises a return line (18) configured for returning slurry (2) to an upstream position (19) relative to the centrifugal filling pump (20), wherein the balance valve (40) is arranged along the return line (18).

5. The arrangement (1) according to any one of the preceding claims, wherein the primer unit (30) is a vacuum pump, or an ejector pump (34), or a fixed displacement lobe pump, or a screw pump.

6. The arrangement (1) according to any one of the preceding claims, wherein the arrangement comprises an inlet valve (50) arranged downstream from the inlet (12), wherein the inlet valve (50) is configured for opening and/or closing flow of slurry (2) through the feed line (14).

7. The arrangement (1) according to any one of the preceding claims, wherein the arrangement comprises one or more flow sensors (62) and/or pressure sensors (64) and/or one or more vibration sensor (61) configured for measuring the flow of slurry.

8. The arrangement (1) according to claim 7, wherein the arrangement comprises one or more controllers (60) configured for receiving sensor data from the one or more flow sensors (62) and/or pressure sensors (64), and the one or more controllers (60) are configured for adjusting the balance valve (40, 42) and/or a rotational speed of the centrifugal filling pump (20) to obtain optimal flow of slurry (2).

9. The arrangement (1) according to claim 7 or 8, wherein the one or more flow sensors (62) and/or pressure sensors (64) are arranged downstream from the one or more centrifugal filling pumps (20), and/or upstream from the centrifugal pumps, and/or inside the centrifugal filling pumps.

10. The arrangement (1) according to any one of the preceding claims, wherein the arrangement comprises an unloading pump (72) configured for pumping slurry (2) out of the tank (10), and the primer unit (30) is an ejector pump (34) connected to the unloading pump (72) and the balance valve (40, 42), wherein the balance valve in a closed position enables the unloading pump (72) to discharge slurry (2) from the tank (10) through the ejector pump (72) and out of the inlet (12) via the centrifugal filling pump (20), while the centrifugal filling pump (20) is in an inactive state.

11. A method (100) of filling a tank (10) with slurry (2) using a centrifugal filling pump (20) comprising steps of:
- filling (110) a pump housing (22) of the centrifugal filling pump (20) with slurry (2) to an operational volume using a primer unit (30);
- activating (120) the centrifugal filling pump (20) to fill the tank (10) with slurry (2); and
- adjusting (130) a balance valve (40, 42) to control flow of slurry (2) to and form the centrifugal filling pump (20) such that the operational volume is maintained and so that an optimal flow of slurry is obtained.

12. The method (100) according to claim 11, wherein the method comprises a further step of:
- maintaining (140) the operational volume by providing a return flow of slurry (2) into the centrifugal filling pump (20) by a step of adjusting a balance valve (40, 42) to control the return flow of slurry (2).

13. The method (100) according to claim 11 or 12, wherein the steps of adjusting (130) the balance valve (40, 42) to control flow of slurry (2) and/or maintaining (140) the operational volume by providing the return flow of slurry is done according to sensor data received by one or more flow sensors (62) and/or pressure sensors (64).

14. The method (100) according to any one of claims 11 to 13, wherein the method comprises a step of:
- ramping (150) the flow of slurry (2) during start of filling and/or end of filling.

15. A method (200) for discharging slurry (2) from a tank (10) through an inactive centrifugal filling pump (20), wherein the method comprises steps of:
- adjusting (210) a balance valve (40, 42) arranged between an ejector outlet (343) of an ejector pump (34) and the tank (10) to a closed position; and
- pumping (220) the slurry (2) out of the tank (10) using an unloading pump (72) arranged between the tank (10) and a second ejector inlet (342) to discharge slurry from the tank through the ejector pump (34) to a first ejector inlet (341) and through the inactive centrifugal filling pump (20) arranged upstream from the first ejector inlet (341).
